# EUROPÄISCHE PATENTSCHRIFT

(11) **EP 3 291 518 B1**
(45) Veröffentlichungstag und Bekanntmachung des Hinweises auf die Patenterteilung: **10.04.2024**
(21) Anmeldenummer: 17188461.2
(22) Anmeldetag: 30.08.2017
(51) Int. Cl.: H04M 1/04, B60R 11/02, B60R 11/00

(54) **HALTERSYSTEM FÜR EIN ELEKTRONISCHES GERÄT**
HOLDING SYSTEM FOR AN ELECTRIC DEVICE
SYSTÈME DE MAINTIEN POUR UN APPAREIL ÉLECTRONIQUE

(30) Priorität: 05.09.2016 DE 102016116580
(43) Veröffentlichungstag der Anmeldung: 07.03.2018
(73) Patentinhaber: BURY Sp. z o.o., 39-300 Mielec (PL)
(72) Erfinder: Bury, Henryk, 32584 Löhne (DE)
(74) Vertreter: Kröncke, Rolf

(56) Entgegenhaltungen:
- WO-A1-2017/220413
- DE-A1-102016 111 448
- US-A1- 2013 221 189
- US-A1- 2016 150 861

## Beschreibung

Die Erfindung betrifft ein Haltersystem für ein elektronisches Gerät mit einem zur ortsfesten Befestigung vorgesehenen Haltestück und einer mit dem Haltestück verbindbaren Halterung, an der das elektronische Gerät lösbar befestigbar ist, wobei das Haltestück an einer Befestigungsplatte und die Halterung an einer Rückwand Befestigungselemente aufweisen, und in die Befestigungsplatte einerseits und in die Rückwand andererseits Magnete oder ferromagnetische Stücke eingesetzt sind.

Es sind zahlreiche Haltersysteme bekannt, mit denen ein Telekommunikationsgerät, insbesondere ein zur Durchführung von Telefonaten geeignetes Telekommunikationsgerät, in einem Fahrzeug befestigbar ist, um beispielsweise Telefonate führen zu können, ohne eine Hand vom Lenker nehmen zu müssen. Es hat sich dabei bewährt, ein Aufnahmeteil vorzusehen, das im Fahrzeug möglichst unauffällig platziert werden kann und den ästhetischen Eindruck der Innenausstattung des Fahrzeugs nicht stört, wenn keine Halterung und kein Telekommunikationsgerät am Aufnahmeteil befestigt sind.

Neben der Aufgabe des mechanischen Haltens des Telekommunikationsgeräts kann die Halterung ferner die Aufgabe erfüllen, das in sie eingesetzte Telekommunikationsgerät mit Strom zu versorgen, sodass das Telekommunikationsgerät im in die Halterung eingesetzten Zustand keine elektrische Energie aus dem eigenen Akku verbraucht und darüber hinaus der eigene Akku durch das elektrische System des Fahrzeugs aufgeladen werden kann.

Ein bekanntes System, wie es beispielsweise in EP 1 266 456 B1 beschrieben ist, weist ein Aufnahmeteil auf, in das eine Halterung einsteckbar ist, wobei beim Einstecken der Halterung Kontakte der Halterung mit Kontakten des Aufnahmeteils in Berührung kommen, um auf diese Weise eine Versorgungsspannung und ggf. weitere elektrische Signale auf die Halterung zu übertragen. Die Halterung ist dabei an einen bestimmten Gerätetyp mechanisch und elektrisch angepasst, um der Tatsache Rechnung zu tragen, dass unterschiedliche Typen von Telekommunikationsgeräten sowohl unterschiedliche mechanische Abmessungen als auch unterschiedliche Positionen und Ausführungen von elektrischen Verbindungen aufweisen.

Aufgrund der Tatsache, dass die heutigen Telekommunikationsgeräte nahezu alle ihre elektrischen Signale in einem Nahfeld drahtlos übertragen können, wie beispielsweise über Bluetooth-Signale, hat sich die erforderliche Kontaktierung der Halterung mit dem Aufnahmeteil auf die Übertragung der Versorgungsspannung reduziert (vgl. DE 10 2005 044 946 B4). In vielen Fällen wird lediglich zusätzlich ein Schaltsignal übertragen, mit dem die Leitung der Versorgungspannung auf die Halterung nur in Abhängigkeit von einer Zündschlossstellung bzw. Detektion der Startfähigkeit des Fahrzeugs aufgrund eines Zugangscodes gesteuert wird, um ein versehentliches Entladen der Fahrzeugbatterie in Abwesenheit des Fahrers, insbesondere bei einem längeren Stehenlassen des Fahrzeugs, zu vermeiden. Alternativ ist es natürlich möglich, einen Pol der Versorgungs-Gleichspannung, der nicht den Massepol bildet, über einen entsprechenden Schalter mit dem Aufnahmeteil und daraus folgend, mit der Halterung zu verbinden.

Das bekannte System hat dazu geführt, dass die Installation in dem Fahrzeug unverändert bleiben konnte, wenn ein anderes Telekommunikationsgerät benutzt werden sollte. Diesem Umstand war Rechnung zu tragen, weil bekanntlich die Verweildauer von Telekommunikationsgeräten bei einem Benutzer häufig sehr kurz ist, da immer neue Telekommunikationsgeräte mit immer neuen Funktionen und Möglichkeiten entwickelt werden und in kurzen zeitlichen Abständen auf den Markt kommen. In diesem Fall war es dann lediglich erforderlich, für das neue Telekommunikationsgerät eine passende Halterung zu beschaffen, da die Verbindung zwischen der Halterung und dem Aufnahmeteil für dieses System immer gleich war.

Dieses Haltersystem hat sich bewährt und zahlreiche Fortschritte mit sich gebracht. Insbesondere im Hinblick auf das Design der Innenräume der Fahrzeuge, insbesondere von Personenkraftwagen, kann ein eingebautes sichtbares Aufnahmeteil für den Halter als störend empfunden werden. Dies gilt insbesondere für Aufnahmeteile, in die ein Halter für das elektronische Gerät eingesteckt werden muss, da ein derartiges Aufnahmeteil notwendigerweise relativ voluminös ausgebildet sein muss.

Es sind ferner seit einiger Zeit Telekommunikationsgeräte bekannt und auf dem Markt, die nicht mehr über eine Kabelverbindung, sondern über eine Induktionsspule induktiv aufladbar sind. Die für das entsprechende Telekommunikationsgerät angepasste Halterung verfügte dabei über eine entsprechende Induktionsspule, die so positioniert ist, dass sie mit der Induktionsspule des Telekommunikationsgeräts mit einem möglichst hohen Wirkungsgrad für die Ladung zusammenwirken kann.

In früheren Zeiten ist versucht worden, den Aufwand für eine speziell an das Telekommunikationsgerät angepasste Halterung dadurch zu vermeiden, dass eine Halterung mit verstellbaren Haltearmen verwendet worden ist, sodass unterschiedliche Größen eines Telekommunikationsgeräts von der Halterung nach einer entsprechenden Verstellung der Haltearme aufgenommen werden konnten. Diese Geräte haben jedoch regelmäßig keine elektrische Verbindung ermöglicht und dienten daher in erster Linie als mechanische Halterung. Soweit der Akkumulator des Telekommunikationsgeräts in der Halterung aufgeladen werden sollte, wurde für eine gesonderte elektrische Verbindung, beispielsweise mittels eines geeigneten Ladekabels, gesorgt, wofür üblicherweise ein zu einem Zigarettenanzünder passender Adapter verwendet wurde. Da eine derartige Lösung moderneren Ansprüchen nicht mehr genügt, kommt eine derartige Halterung für anspruchsvollere Lösungen nicht in Betracht. DE 10 2004 062 178 B4 sieht eine Ladekabelverbindung zwischen Aufnahmeteil und Halterung vor.

Durch US 2013/0221189 A1 ist eine Halteranordnung bekannt, mit der ein elektronisches Gerät an einem Befestigungsriemen befestigbar ist, der am Körper einer Person, beispielsweise am Handgelenk oder am Gürtel befestigt werden kann. An dem Riemen ist eine Halteplatte angeordnet, der eine prinzipiell gleich aufgebaute Befestigungsplatte an der Rückseite des elektronischen Geräts zugeordnet ist. Die Befestigungsplatte weist einen zylindrischen Vorsprung auf, der in eine entsprechende Öffnung der Halteplatte einführbar ist. Dies gelingt in einer Einführposition, wenn ein radialer Ansatz des Vorsprungs in eine entsprechende radiale Ausnehmung der Öffnung eingeführt wird. Durch eine Drehbewegung um 45° können die beiden Platten zueinander so ausgerichtet werden, dass jeweils vier Magnete der beiden Platten einander gegenüberliegen und so eine magnetische Verriegelungsstellung bewirken. Der radiale Vorsprung liegt dann hinter der Öffnung und verhindert ein axiales Abziehen des elektronischen Geräts von der Halteplatte. Die Öffnung mit der Ausnehmung und der radiale Ansatz bilden somit eine Schlüssellochverbindung zur Sicherung der axialen Position. Für die Festlegung in der Drehrichtung sind ausschließlich die Magnete vorhanden, so dass eine ausschließlich magnetische Festlegung in der Drehrichtung stattfindet. Eine ähnliche Anordnung ist durch US 2016/0150861 A1 bekannt, in der ebenfalls eine Art Schlüssellochverbindung mit einer Anordnung mehrerer Magnete zusammenwirkt, um das Ansetzen eines Geräts an einer Befestigungsplatte in mehreren, beispielsweise vier, unterschiedlichen Drehpositionen zu ermöglichen. Auch hier wirken radiale Vorsprünge mit der Begrenzung einer für Öffnung nach Art eines Schlüssellochs zusammen, um eine axiale mechanische Festlegung vorzunehmen, während für die Drehposition nur eine magnetische Festlegung realisiert wird.

Der vorliegenden Erfindung liegt die Aufgabe zu Grunde, ein Haltersystem der eingangs erwähnten Art so auszubilden, dass es insgesamt hinsichtlich der fest verbauten Teile kleiner und unauffälliger gestaltet werden kann und dennoch eine gute Handhabbarkeit gewährleistet ist.

Diese Aufgabe wird mit einem Haltersystem mit den Merkmalen des Anspruchs 1 gelöst. Vorteilhafte Aussführungsformen sin in den Unteransprüchen beschrieben.

Bei einem Haltersystem der eingangs erwähnten Art wird vorgeschlagen, dass die Befestigungselemente durch vier L-förmige Ansätze an der Rückseite der Halterung und Rampenführungen nach Art eines Bajonettverschlusses gebildet sind, wobei die L-förmigen Ansätze in die entsprechenden Rampenführungen der Befestigungsplatte in einer Ausgangsstellung einführbar sind und die Befestigungselemente mittels einer Drehbewegung um weniger als 180° zueinander aus der Ausgangsstellung in eine mechanische Raststellung bringbar sind, dass die Magnete die mechanische Befestigung der Halterung an dem Haltestück mittels der Drehbewegung durch eine zunehmende magnetische Anziehung aus der Ausgangsstellung in die Raststellung hinein unterstützen, und dass die Befestigungsplatte einen zum Lösen eines Federandrucks und Ermöglichen eines Zurückdrehens aus dem Bajonettverschluss eingerichteten Hebel hat.

Da die Befestigung des Halters an dem Haltestück lediglich mit einer Drehbewegung nach Art eines Bajonettverschlusses erfolgt, kann die Befestigungsplatte des Haltestücks relativ klein und unauffällig ausgestaltet sein. Sie muss lediglich eine Mindestgröße aufweisen, die eine stabile mechanische Befestigung ermöglicht. In der wünschenswerten relativ kleinen Ausgestaltung der Befestigungsplatte bedarf es grundsätzlich einer höheren Sorgfalt für das Ansetzen der Halterung an das Haltestück, um die Befestigungselemente so zueinander auszurichten, dass ein Übergang in die Raststellung möglich ist. Um die Handhabung bei der relativ kleinen Ausbildung des Haltersystems zu vereinfachen, ist erfindungsgemäß vorgesehen, dass in die Befestigungsplatte des Haltestücks einerseits und in die Rückwand des Halters andererseits magnet- oder ferromagnetische Stücke so eingesetzt sind, dass eine zunehmende magnetische Anziehung aus der Ansatzstellung in die Raststellung hinein vorhanden ist. Dies führt dazu, dass schon bei Annäherung des Halters an das Haltestück der Halter relativ zu dem Haltestück durch die Magnetwirkung ausgerichtet wird, sodass es keiner besonderen Aufmerksamkeit der Bedienperson mehr bedarf, um die korrekte Einführung des Halters in die Raststellung durchzuführen. Durch diese Maßnahme gelingt es, die Handhabung des Haltersystems auch bei einer nur klein ausgebildeten Befestigungsplatte des Haltestücks zu verbessern.

In einer bevorzugten Ausführungsform der Erfindung sind sowohl in die Rückwand der Halterung als auch in die Befestigungsplatte des Haltestücks jeweils zwei Permanentmagnete so eingesetzt, dass sie in der Raststellung jeweils einander gegenüberliegen. Dies ist nur möglich, wenn ungleichnamige Pole der gegenüberliegenden Permanentmagnete zueinander zeigen.

Es ist allerdings auch möglich, dass zwei Permanentmagnete mit zwei ferromagnetischen Platten entsprechender Größe zusammenwirken, die so in Richtung auf die Permanentmagnete in die Raststellung gezogen werden. Durch die Verwendung von Permanentmagneten sowohl in der Rückwand der Halterung als auch in der Befestigungsplatte des Haltestücks wird allerdings eine wesentlich verbesserte Führung und vergrößerte Zugkraft in Richtung auf die Raststellung bewirkt.

Allerdings ist erfindungsgemäß vorgesehen, dass der Halter und das Haltestück nicht nur über die Magnetwirkung miteinander verbunden sind, sondern dass die Magnetwirkung lediglich die mechanische Befestigung des Halters an dem Haltestück unterstützt und erleichtert. In einer einfachen und gut handhabbaren Ausführungsform ist zwischen Haltestück und Halterung eine Bajonettführung für die Drehbewegung vorgesehen. Die Befestigungselemente sind somit Ansätze, die auf einer Rampe in die Raststellung geführt werden und so einen Bajonettverschluss bilden.

Das erfindungsgemäße Haltestück kann sich an einem Arm befinden, der mit einem Ansatz in ein Aufnahmeteil einschiebbar ist, das als kleines, flaches Gehäuse ausgebildet sein kann, in dem ein breiter Aufnahmekanal mit einer geringen Höhe gebildet wird. Der entsprechend gebildete Ansatz kann in dem Aufnahmekanal im eingeschobenen Zustand festlegbar sein, sodass auf diese Weise eine mechanisch stabile Halterung gewährleistet wird.

Alternativ hierzu kann das Haltestück auch an einer Klemmhalterung ausgebildet sein. In allen Fällen ist es zweckmäßig, dass das Haltestück um wenigstens eine, vorzugsweise um zwei senkrecht zueinander stehende Drehachsen verschwenkbar ist, um so ein etwaiges Display oder eine Bedienfläche des elektronischen Geräts in eine gut erkennbare oder gut erreichbare Position zu verbringen.

Wenn das Haltestück an einer Klemmhalterung ausgebildet ist, ergibt sich eine einfache und gegebenenfalls nachträgliche Befestigungsmöglichkeit. Die Ausbildung der Befestigungsplatte des Haltestücks an einem Arm ermöglicht eine gute Positionierbarkeit des Halters, und damit des in dem Halter gehaltenen elektronischen Geräts, wenn der Arm wenigstens zwei zueinander parallele Drehachsen aufweist, sodass sich die Positionierbarkeit in einem Freiheitsgrad durch eine diesbezüglich Z-förmige Ausbildung des Arms ergibt. Darüber kann selbstverständlich eine weitere, dazu senkrecht stehende Drehachse vorgesehen sein.

Wenn ein Ansatz des Befestigungsstücks in einem Aufnahmekanal eines Aufnahmeteils im eingeschobenen Zustand festlegbar ist, wird auf diese Weise eine mechanisch stabile Halterung gewährleistet. Die Festlegung des Ansatzes in dem Aufnahmekanal kann innerhalb des Aufnahmekanals erfolgen, sodass nach außen sichtbar nur das flache Gehäuse des Aufnahmeteils ohne etwaige Verriegelungselemente erscheint. Das Aufnahmeteil kann universell ausgebildet sein, weil es eine Verbindung mit unterschiedlichen Ansätzen, die zu unterschiedlichen Haltestücken gehören können, ermöglicht. Die Ausbildung eines Aufnahmekanals in dem Aufnahmeteil ermöglicht eine stabile Führung eines passenden Ansatzes sowie eine stabile Verriegelung des Ansatzes, beziehungsweise des mit dem Ansatz versehenen Geräts, die mit üblichen Fahrzeugbewegungen nicht ungewollt gelöst wird. Aufgrund der universellen Ausbildung des Aufnahmeteils ist es auch zur Aufnahme anderer elektronischer Geräte, die keine Telekommunikationsgeräte sind, geeignet, beispielsweise Duftspender, Taschenlampen o. dgl.

In einer bevorzugten Ausführungsform ist in wenigstens einer Begrenzung des Aufnahmekanals wenigstens ein Magnet so angeordnet, dass in der Einschubrichtung wirksame Magnetpole entstehen. In entsprechender Weise sind im Ansatz Magnetpole ausgebildet, die bei richtiger Ausrichtung des Ansatzes in dem Aufnahmekanal den Ansatz in eine Festlegestellung in dem Aufnahmekanal hineinziehen und bei falscher Ausrichtung das Erreichen der Festlegestellung behindern.

Der Ansatz ist in dem Aufnahmeteil daher nur dann vollständig einschiebbar und festlegbar, wenn der Ansatz in einer vorgesehenen Weise richtig ausgerichtet in die Eintrittsöffnung eingeschoben wird. Dies ist insbesondere von Bedeutung, wenn zwischen dem Aufnahmeteil und dem Ansatz eine elektrische Verbindung hergestellt wird, die nicht mit einer falschen Polung erfolgen darf, wie dies bei einer Gleichspannungsversorgung in einem Fahrzeug der Fall ist. Die Magnetpole verhindern eine nicht vorgesehene Ausrichtung des Ansatzes in dem Aufnahmekanal - und somit eine etwaige Verpolung eines anzuschließenden Geräts, insbesondere Telekommunikationsgeräts, - und ermöglichen dabei eine Ausbildung des Ansatzes ohne störende mechanische Codierung, sodass auch der Ansatz optisch ansprechend mit einer glatten Oberfläche ausgebildet werden kann, die kein Verschmutzungsrisiko durch schwer zu reinigende Ecken und Absätze mit sich bringt. Darüber hinaus wird durch die Magnetpole ein sehr angenehmes Handhabungsgefühl erreicht, da die Magnetpole den Ansatz und das damit verbundene Gerät in den Aufnahmekanal in die Festlegestellung hineinziehen und somit dem Nutzer ein komfortables Handhabungsgefühl vermitteln. Der Nutzer muss nicht - wie bei früheren Systemen - mit einer möglichst dosierten Kraft einen Rastmechanismus überwinden und durch ein entsprechendes Geräusch feststellen, ob die ordnungsgemäße Verriegelung in dem Aufnahmeteil erfolgt ist. Vielmehr wird erfindungsgemäß dem Nutzer ein Gefühl der Automatisierung vermittelt, wenn sich der richtig eingesetzte Ansatz mit Hilfe der Magnetkraft in seine Festlegestellung hineinzieht.

Vorzugsweise wird in der Festlegeposition ein mechanisches Einrasten durchgeführt, aus dem der Ansatz nur mit einer gewissen Zugkraft wieder herausgezogen werden kann. Auf diese Weise wird die Festlegung des Ansatzes in dem Aufnahmekanal zusätzlich gesichert. Dadurch wird es möglich, die durch die Magnetpole bewirkte Einziehkraft auf den Ansatz in einer für die Handhabung geeigneten Weise zu dosieren, ohne allein durch die Magnetpole bereits die vollständige Festlegekraft für den Ansatz in den Aufnahmekanal aufbringen zu müssen.

Besonders bevorzugt ist es, wenn das Haltersystem auch eine Übertragung elektrischer Leistung ermöglicht, insbesondere zum Aufladen eines Telekommunikationsgeräts, eines Taschenlampenakkumulators, einer Powerbank o. dgl. Hierzu ist in einer bevorzugten Ausführungsform der Erfindung das Aufnahmeteil mit elektrischen Anschlussleitungen verbindbar und es weist Anschlusskontakte in einer Stirnwand des Aufnahmekanals auf. Hierzu passend ist der Ansatz mit die Anschlusskontakte in der Festlegstellung kontaktierenden Kontaktelementen und damit verbundenen Leitungen zur Zuführung elektrischer Potentiale zu der Halterung versehen. Die erfindungsgemäße Positionierung des Ansatzes in dem Aufnahmekanal stellt dabei sicher, dass die Kontaktelemente des Ansatzes einen elektrischen Kontakt mit den Anschlusskontakten des Aufnahmeteils herstellen, sodass auf diese Weise beispielweise die Versorgungsspannung vom Aufnahmeteil auf den Ansatz übertragbar ist. Vom Ansatz wird eine entsprechende Übertragung der Versorgungsspannung auf die Halterung bewirkt.

Um einen Kurzschluss durch in den Aufnahmekanal gelangende leitende Fremdkörper zu verhindern, kann es in einer Ausführungsform der Erfindung vorgesehen sein, die Stirnwand des Aufnahmekanals mit wenigstens einem Vorsprung neben den Anschlusskontakten zu versehen. Eine beispielweise in den Aufnahmekanal gelangende Münze ist dann nicht in der Lage, die Anschlusskontakte zu berühren und miteinander zu einem Kurzschluss zu verbinden. Dementsprechend findet eine elektrische Verbindung nur über den Ansatz statt, der auf seiner freien Stirnseite wenigstens eine entsprechende Ausnehmung aufweist, die den Vorsprung im eingeschobenen Zustand aufnimmt.

Der Aufnahmekanal weist in einer Ausführungsform der Erfindung im Bereich der schlitzförmigen Eintrittsöffnung eine wenigstens doppelt so große Breite wie Höhe auf. Weiter bevorzugt ist es, wenn sich die Höhe mit zunehmender Entfernung von der Eintrittsöffnung verringert Dementsprechend weist der Ansatz eine gleiche Verringerung seiner Höhe zu seinem freien Ende hin auf. Diese Verringerung der Höhe kann stufenförmig erfolgen. In einer Ausführungsform der Erfindung findet die Verringerung der Höhe stetig statt, sodass der Ansatz bezüglich seiner Höhe konisch verjüngend ausgebildet ist.

Die Eintrittsöffnung kann mit einer schwenkbaren Klappe versehen sein, die mittels einer Feder in eine die Eintrittsöffnung verschließende Stellung vorgespannt ist und durch den eingeschobenen Ansatz in eine den Aufnahmekanal öffnende Stellung verschwenkt wird. Dadurch ist es möglich, die Eintrittsöffnung immer im verschlossenen Zustand zu halten, solange kein Ansatz in die Eintrittsöffnung eingeschoben wird. Vorzugsweise steht dabei die Klappe in einem stumpfen Winkel zu der Öffnungsstellung, um so einer Öffnung der Klappe durch einen zufällig gegen die Klappe fallenden Gegenstand zu erschweren.

Die Anbringung des Aufnahmeteils in dem Fahrzeug kann an verschiedensten Stellen erfolgen. Wenn der Ansatz starr mit der Halterung verbunden ist, legt die Positionierung des Aufnahmeteils auch die Positionierung und ggf. Ablesbarkeit des Telekommunikationsgeräts weitgehend fest. Zwar ist es möglich, das Telekommunikationsgerät beispielsweise mit einer Kugellagerung am Ansatz verschwenkbar anzubringen, dennoch ist der Ort des Telekommunikationsgeräts durch die Position des Aufnahmeteils bestimmt. Erfindungsgemäß ist eine Abhilfe dadurch vorgesehen, dass der Ansatz Teil eines Haltestücks ist, das als schwenkbarer Arm ausgebildet ist, dessen freies Ende eine Befestigungsplatte zur Befestigung der Halterung aufweist. Die Halterung kann somit an dem Haltestück lösbar angebracht werden. Durch die Verschwenkung des Arms kann das von der Halterung gehaltene Telekommunikationsgerät in eine günstigere Position verschwenkt werden.

Dies ist insbesondere möglich, wenn der schwenkbare Arm wenigstens drei Abschnitte und zwei horizontale, voneinander beabstandete Drehgelenke und ein senkrecht dazu stehendes vertikales Drehgelenk aufweist. Auf diese Weise kann die Positionierung des von der Halterung gehaltenen Geräts in einem großen Bereich erfolgen, wobei insbesondere durch eine Z-artige Verschwenkung der Abschnitte über die beiden horizontalen Drehgelenke die Höhe und durch das vertikale Drehgelenk die Ausrichtung des Telekommunikationsgeräts einstellbar sind.

In einer vorteilhaften Ausführungsform der Erfindung ist die Halterung zur Aufnahme unterschiedlicher Telekommunikationsgeräte mit verstellbaren Haltearmen versehen. Das erfindungsgemäße Haltersystem ermöglicht somit die Abkehr von an ein spezielles Telekommunikationsgerät angepassten Halterungen und die Verwendung quasi universeller Halterungen, in denen Telekommunikationsgeräte unterschiedlicher Abmessungen befestigbar sind. Dies ist insbesondere von Vorteil, wenn die Halterung eine Induktionsspule in ihrer Rückwand und eine Anzeige aufweist, die eine korrekte Positionierung des für eine induktive Ladung vorgesehenen Telekommunikationsgeräts vor der Induktionsladespule bei einer Verstellung eines als Fuß ausgebildeten und das Telekommunikationsgerät tragenden Haltearms anzeigt. Bei einer induktiven Ladung des Geräts ist eine galvanische elektrische Verbindung zwischen der Halterung und dem Telekommunikationsgerät nicht mehr erforderlich. Daher kommt es nur noch darauf an, dass die Induktionsladespule der Halterung mit der entsprechenden Induktionsspule des Telekommunikationsgeräts optimal positioniert wird, damit eine Aufladung des Telekommunikationsgeräts in der Halterung mit einem möglichst hohen Wirkungsgrad erfolgen kann.

Da die Ladespulen der Telekommunikationsgeräte regelmäßig in der Mittenachse angeordnet sind, ist es bevorzugt, wenn zwei seitliche Haltearme nur gekoppelt miteinander verstellbar sind, sodass unterschiedlich bereite Telekommunikationsgeräte immer mittig vor der Rückwand positionierbar sind.

Die Erfindung soll im Folgenden anhand von in der Zeichnung dargestellten Ausführungsbeispielen näher erläutert werden. Es zeigen:
- Figur 1: eine perspektivische Darstellung eines Gehäuses eines Aufnahmeteils;
- Figur 2: einen Längsschnitt durch das Aufnahmeteil gemäß Figur 1;
- Figur 3: eine perspektivische Ansicht eines Aufnahmeteils und eines Haltestücks mit einem Ansatz zum Einschieben in einen Aufnahmekanal des Aufnahmeteils;
- Figur 4: eine Draufsicht auf die Anordnung gemäß Figur 3;
- Figur 5: eine Darstellung gemäß Figur 3 mit dem in den Aufnahmekanal eingeschobenen Ansatz;
- Figur 6: eine Draufsicht auf die Anordnung gemäß Figur 5;
- Figur 7: einen Teil-Längsschnitt gemäß der Line A-A in Figur 6, gemäß Figur 7a in der noch nicht eingesteckten Stellung und gemäß Figur 7b in der eingesteckten Stellung des Ansatzes in dem Aufnahmekanal;
- Figur 8: eine Seitenansicht einer Halterung mit ausgefahrenen Haltearmen;
- Figur 9: die Seitenansicht gemäß Figur 8 mit maximal eingefahrenen Haltearmen;
- Figur 10: eine perspektivische Darstellung der Halterung mit einem gestrichelt angedeuteten Telekommunikationsgerät;
- Figur 11: eine perspektivische Darstellung der Rückseite der Halterung sowie der zur Rückseite der Halterung zeigenden Befestigungsplatte des Haltestücks;

- Figur 12: einen Schnitt durch die Halterung sowie eines Endabschnitts des Haltestücks mit der Befestigungsplatte zur Verdeutlichung der Position von eingesetzten Permanentmagneten;

Figur 13 die Anordnung gemäß Figur 12 im montierten Zustand.

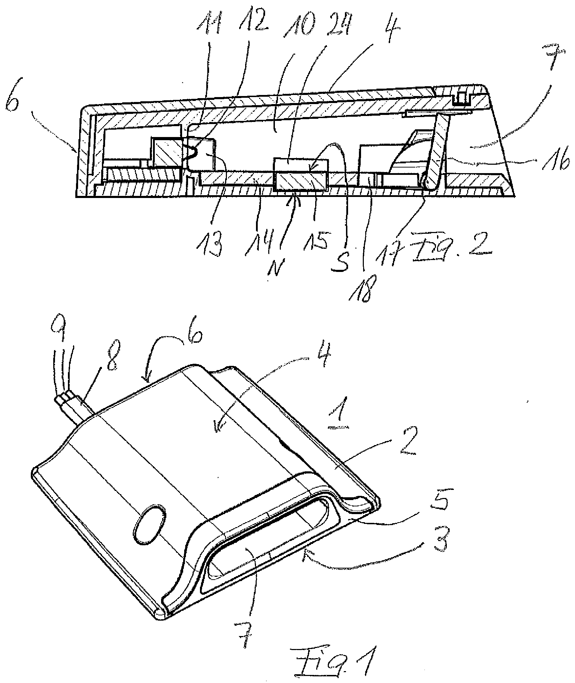

Figur 1 zeigt ein Aufnahmeteil, das ein Gehäuse 2 mit einer ebenen Unterseite 3 und einer geschwungenen, gewölbten Oberseite 4 aufweist. Das Gehäuse 2 ist mit einer vorderen Stirnseite 5 und einer rückwärtigen Stirnseite 6 versehen. Wie Figur 2 verdeutlicht, ist die rückwärtige Stirnseite geschlossen, während die vordere Stirnseite 5 eine schlitzförmige Eintrittsöffnung 7 aufweist, deren Breite deutlich größer ist als deren Höhe, wobei das Verhältnis von Breite zu Höhe der Eintrittsöffnung größer als 2:1, insbesondere größer als 2,5:1 und vorzugsweise größer als 3:1 ist.

Die Figuren 1 und 2 zeigen, dass die geschwungen gewölbte Oberseite 4 von der vorderen Stirnseite 5 aus zur hinteren Stirnseite 6 kontinuierlich in ihrer Höhe abfällt.

Das Gehäuse 2 ermöglicht an der rückwärtigen Stirnseite 6 die Durchführung eines elektrischen Anschlusskabels 8, das im dargestellten Ausführungsbeispiel als Flachkabel mit drei Leitern 9 ausgebildet ist. Die drei Leiter können den "+"-Pol, den "-"-Pol (Masse) und ein Schaltsignal "Zündung ein/aus" führen.

Die geschwungene gewölbte Oberseite 4 des Gehäuses 2 liegt seitlich von der Eintrittsöffnung 7 über die gesamte Länge des Gehäuses unmittelbar auf der Unterseite 3 auf und erhebt sich von dort zur Mitte hin, wodurch der Platz für die rechteckige schlitzförmige Eintrittsöffnung 7 im Bereich der vorderen Stirnseite 5 geschaffen wird. Im Innern des Gehäuses ist ein von der Eintrittsöffnung 7 sich nach hinten erstreckender Aufnahmekanal 10 ausgebildet, der sich aufgrund der nach hinten abfallenden Oberseite 4 in entsprechender Weise in seiner Höhe nach hinten kontinuierlich verkleinert und an einer Stirnwand 11 endet. Durch die Stirnwand 11 ragen drei als Federkontakte ausgebildete Kontakte 12, die jeweils mit einem der drei Leiter 9 verbunden sind. Zwischen den Kontakten 12 befinden sich in der Stirnwand 11 Vorsprünge 13, die sich in den Aufnahmekanal 10 weiter hinein erstrecken als die Federkontakte 12. Dadurch wird erreicht, dass die Kontakte 12 beispielsweise nicht mit einer in den Aufnahmekanal 10 hineinfallenden oder hineingesteckten Münze geschlossen werden können.

In einem Boden 14 des Aufnahmekanals befinden sich vorzugsweise mehrere Magnete 15, die vorzugsweise Permanentmagnete sind und von denen in Figur 2 nur einer dargestellt ist. Die Permanentmagnete bilden gleichgerichtet einen magnetischen Nordpol N und einen magnetischen Südpol S aus, die quer zur Längsrichtung des Aufnahmekanals 10 (Einschubrichtung) hintereinander liegen, sodass der Südpol S zum Aufnahmekanal 10 hin- und der Nordpol N vom Aufnahmekanal 10 wegzeigendangeordnet ist.

Die schlitzförmige Eintrittsöffnung 7 ist durch eine schwenkbar gelagerte Klappe 16 unter der Wirkung einer Feder um ein Drehlager 17 in eine verschlossene Stellung geschwenkt, die in Figur 2 dargestellt ist. Dabei ist das freie Ende der Klappe etwas weiter als 90° gegenüber dem Boden verschwenkt, sodass die Klappe 16 mit dem Boden 14 einen stumpfen Winkel auf der Innenseite des Aufnahmekanals 10 bildet. Ein auf die Klappe 16 wirkender schmaler Gegenstand rutscht somit in Richtung des Drehlagers 17 ab und erschwert die Öffnung der Klappe 16. Zum Öffnen des Aufnahmekanals 10 muss die Klappe 16 aus der in Figur 2 dargestellten geschlossenen Stellung nach innen in den Aufnahmekanal 10 hineingeschwenkt werden, bis die Klappe in einer passenden Ausnehmung 18 des Bodens 14 zu liegen kommt und so den Aufnahmekanal 10 freigibt.

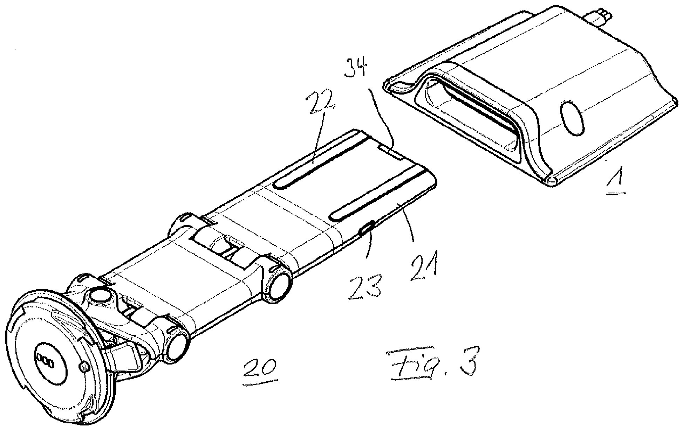

Figur 3 zeigt ein zur Aufnahme in dem Aufnahmeteil 1 ausgebildetes Haltestück 20, das einen Ansatz 21 aufweist, dessen Form der Form des Aufnahmekanals 10 angepasst ist. Demgemäß verjüngt sich der Ansatz 21 in seiner Höhe kontinuierlich, sodass er in dem Aufnahmekanal 10 stabil und mit geringen Toleranzen geführt ist.

Der Ansatz 21 weist zwei in seine Oberfläche auf der Oberseite eingesetzte Streifen 22 auf. Zwei entsprechende Streifen 22 befinden sich ferner auf der in Figur 3 nicht dargestellten Unterseite. Die Streifen 22 bestehen aus Textil, insbesondere beflocktem Textil, und ragen als Kratzschutz bei der Einschubbewegung etwas über die benachbarte Oberfläche heraus.

Beim Einschieben des Ansatzes 21 in den Aufnahmekanal 10 ergibt sich eine Festlegestellung aus seitlich an dem Ansatz vorgesehene Rastnasen 23, die in entsprechende Rastausnehmungen 24 (Figur 2) des Aufnahmekanals 10 federnd einrasten können. Hierzu sind die Rastnasen 23 in üblicher Weise mit einer sägezahnförmigen Anlaufschräge versehen, an die sich eine Rastschräge mit einer wesentlich größeren Steigung anschließt. Dadurch benötigt das Einziehen in die Raststellung deutlich weniger Kraft als das Herausziehen des Ansatzes 21 aus der Raststellung. Der Ansatz 21 weist an seinem vorderen freien Ende eine Ausnehmung 34 auf, in der der zwischen den Kontakten 12 in der Stirnwand 11 des Aufnahmekanals 10 befindliche Vorsprung 13 aufgenommen wird, sodass der Ansatz 21 mit (nicht dargestellten) stirnseitigen Kontaktflächen die Kontakte 12 kontaktieren kann.

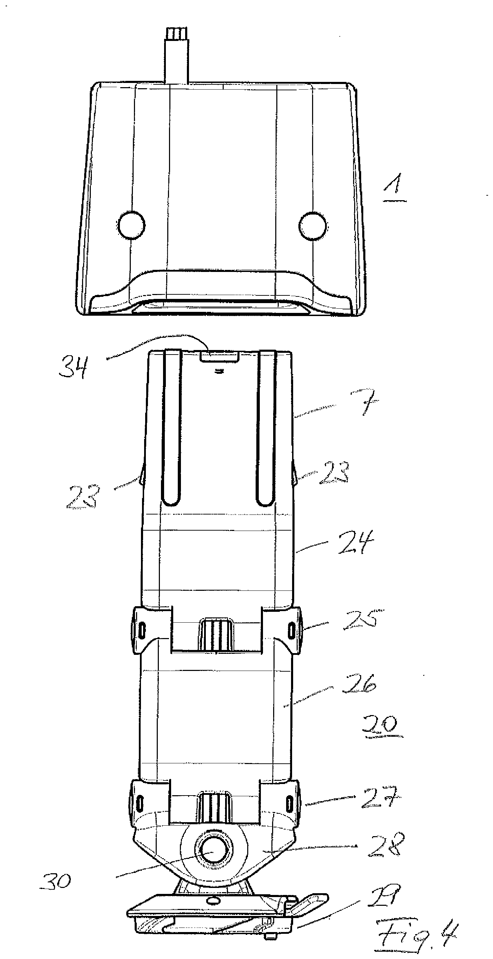

Die Figuren 3 und 4 verdeutlichen, dass der Ansatz 7 Teil eines ersten Abschnitts des Haltestücks 20 ist. Der erste Abschnitt 24 ist über ein erstes horizontales Drehgelenk 25 mit einem zweiten Abschnitt 26 des Haltestücks 20 verbunden. Dieses bildet ein starres Verbindungsstück und ist über ein zweites horizontales Drehgelenk 27 mit einem dritten Abschnitt 28 des Haltestücks 20 verbunden. Die drei Abschnitte 24, 26, 28 des Haltestücks 20 bilden somit einen Gerätearm, der durch eine mehr oder weniger starke Z-förmige Abwinkelung der Abschnitte zueinander die Einstellung unterschiedlicher Höhe und unterschiedlicher Abstände zum Aufnahmeteil 1 ermöglicht, wenn das Haltestück 20 in das Aufnahmeteil 1 eingeschoben ist.

An dem dritten Abschnitt 28 ist eine kreisförmig ausgebildete Befestigungsplatte 29 über ein senkrecht zu den Achsen der horizontalen Drehgelenke 25, 27 stehendes vertikales Drehgelenk 30 verbunden.

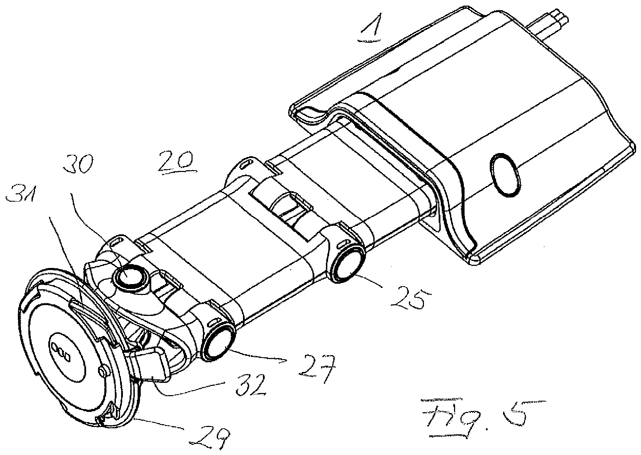

Dadurch ist die Befestigungsplatte 29 um eine vertikale Achse schwenkbar. Wie insbesondere Figur 5 erkennen lässt, ist die Befestigungsplatte 29 mit einem Twist-Lock-Verschluss versehen. Durch einen Ansatz entsprechender Rastnocken in einer Ausgangsstellung können diese mit einer Drehbewegung auf spiralförmig angeordneten Rastschrägen laufen und durch die Wirkung einer federnden Platte in eine Raststellung hinter der Rastschräge gedrückt werden. Mit Hilfe eines Hebels 32 kann der Federandruck gelöst werden, sodass ein Zurückdrehen aus dem Twist-Lock-Verschluss 31 möglich ist.

Über die Drehgelenke 25, 27 und 30 werden durch das Haltestück 20 die elektrischen Potentiale geleitet und gelangen auf drei unsymmetrisch angeordnete Kontaktflächen 33 auf der Befestigungsplatte 29, was unten noch näher erläutert wird.

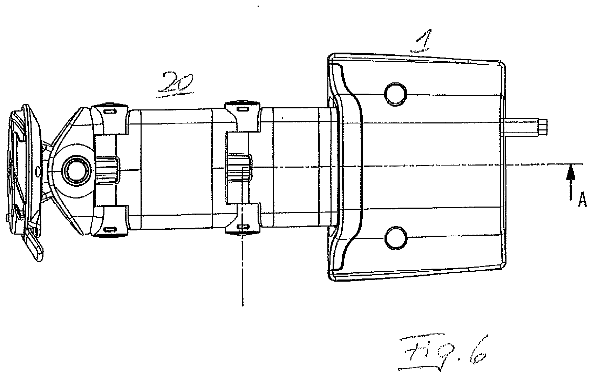

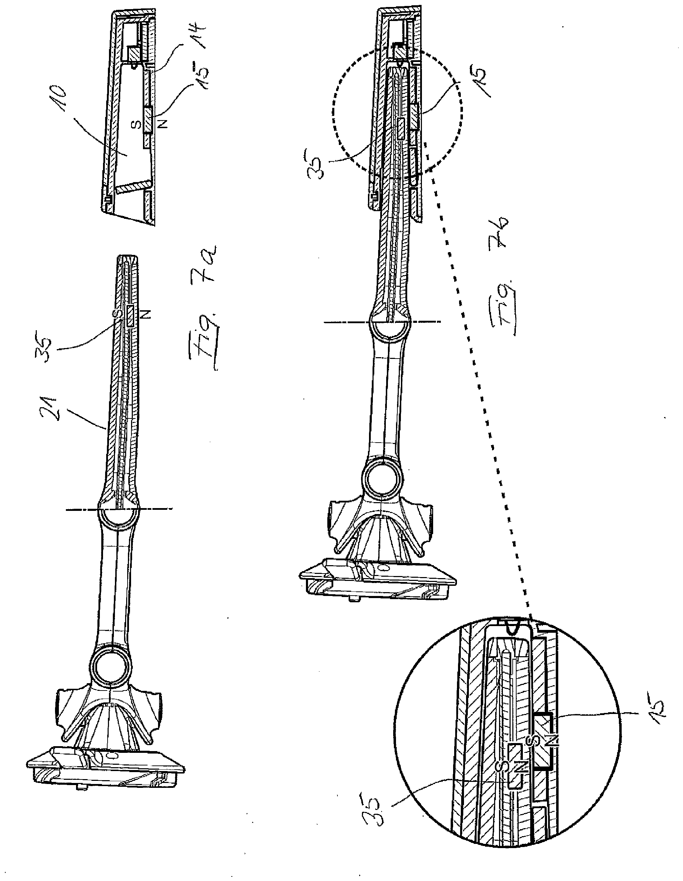

Die Figuren 6 und 7a und 7b verdeutlichen noch einmal die Befestigung des Haltestücks 20 in dem Aufnahmeteil 1 durch Einschieben des Ansatzes 21 in den Aufnahmekanal 10. Figur 7 lässt dabei die durch den Ansatz 7b heruntergedrückte Klappe 16 erkennen.

Figur 7a lässt erkennen, dass die im Boden 14 des Aufnahmekanals 10 befindlichen Magnete 15 einen zum Aufnahmekanal 10 zeigenden Magnetpol (hier Südpol S) und einen vom Aufnahmekanal 10 wegzeigenden Magnetpol (hier Nordpol N) aufweisen. Der Ansatz 21 ist mit entsprechenden Magneten 35 versehen, die eine ebenfalls quer zur Längsachse des Ansatzes 21 verlaufende Ausrichtung eines Nordpols N und eines Südpols S aufweisen.

Wie Figur 7b verdeutlicht, wirken die Magnet 15, 35 beim Einschieben des Ansatzes 21 in den Aufnahmekanal 10 zusammen. Die Magnetpole N, S sind dabei so positioniert, dass im vollständig eingeschobenen Zustand des Ansatzes 21 der Magnetpol N des Magneten 35 im Ansatz 21 dem Magnetpol S des Magneten 15 im Boden 14 des Aufnahmekanals 10 angenähert wird. Dadurch wird der Ansatz 10 magnetisch in den Aufnahmekanal 10 hineingezogen.

Sollte hingegen der Ansatz 21 in einer falschen, um 180° gedrehten Stellung in den Aufnahmekanal 10 eingeschoben werden, nähern sich erkennbar gleichnamige Pole N oder S einander an, wodurch eine zunehmende Gegenkraft gegen das Einschieben des Ansatzes 21 in den Aufnahmekanal 10 entsteht. Es ist daher mit normalem Kraftaufwand nicht möglich, den Ansatz 21 in der um 180° gedrehten (falschen) Stellung soweit in den Aufnahmekanal 10 zu schieben, dass eine Rastposition erreicht wird. In der richtigen Ausrichtung des Ansatzes 21 wird hingegen der Ansatz 21 in den Aufnahmekanal 10 durch die Magnete 15, 35 bis in die Festlegestellung hineingezogen, die sich aus dem Zusammenwirken der Rastnasen 23 und der Rastausnehmungen 24 (Figur 2) ergibt. Die maximale Magnetkraft wird erreicht, wenn die ungleichnamigen Pole der Magneten 15, 35 vollständig zueinander ausgerichtet sind, also mit ihren Mittenachsen miteinander fluchten. Wie Figur 7b, insbesondere mit der dargestellten Vergrößerung, verdeutlicht, muss diese Stellung in der Praxis aber nicht exakt erreicht werden.

Die Drehgelenke 25, 27, 30 des Haltestücks 20 sind als selbsthemmende Drehgelenke ausgebildet, indem sie mit gegeneinander spannbaren Platten versehen sind. Durch abwechselnde Ausbildung von metallischen Platten und isolierenden Platten lassen sich über die Drehgelenke die elektrischen Potentiale übertragen.

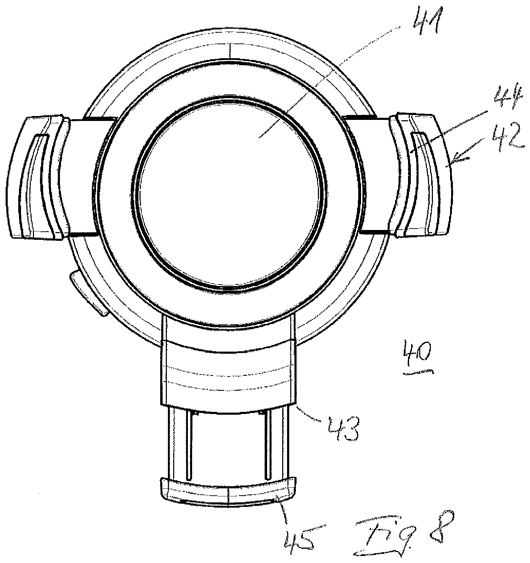

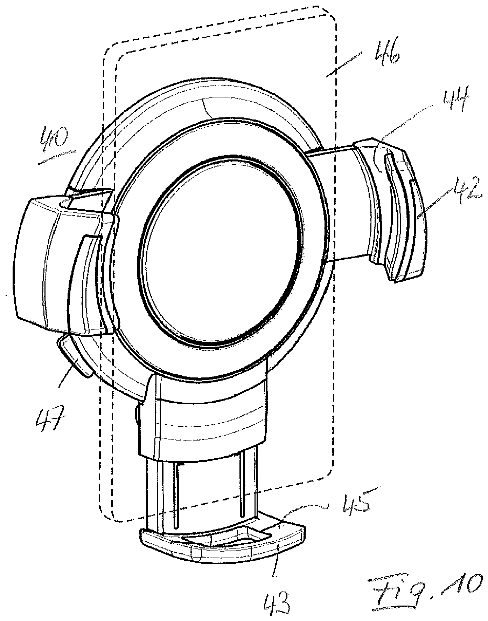

An die Befestigungsplatte 29 des Haltestücks 20 ist eine Halterung 40 rastend ansetzbar, die in den Figuren 8 bis 11 dargestellt ist. Die Halterung 40 weist eine kreisrunde, der Form der Befestigungsplatte 29 entsprechende Rückwand 41 auf, von der aus sich zwei seitliche Haltearme 42 in seitlicher Richtung und ein als Fuß ausgebildeter Haltearm 43 nach unten erstrecken. Die Haltearme 42, 43 sind mit Klemmbacken 44, 45 versehen, die zur Anlage an einem im Wesentlichen als flacher Quader ausgebildeten Telekommunikationsgerät 46 (Figur 10) bestimmt sind.

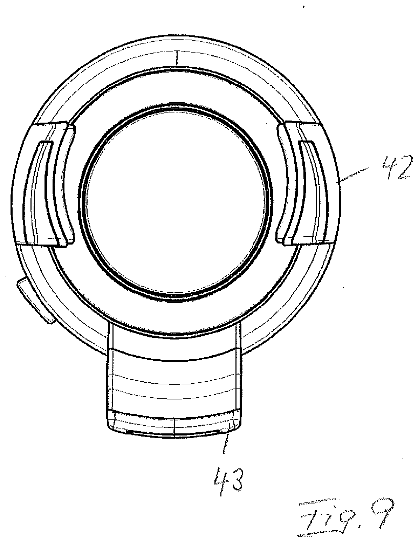

Figur 8 zeigt die Haltearme 42, 43 in ihrer maximal ausgefahrenen Position, Figur 9 in ihrer maximal eingefahrenen Position.

Die Haltearme 42, 43 sind in an sich bekannter Weise aus der in Figur 8 maximal ausgefahrenen Stellung nur in einer Richtung verstellbar. Gemäß Figur 10 wird das Telekommunikationsgerät 46 in die Halterung 40 mit den maximal ausgefahrenen Haltearmen 42, 43 eingesetzt. Danach wird der als Fuß ausgebildete Haltearm 43 nach oben verschoben, also zur Rückwand 41 hin eingezogen bis eine für das Telekommunikationsgerät 46 geeignete Position erreicht ist. Danach werden die seitlichen Haltearme 42 eingefahren, wobei deren Bewegung miteinander gekoppelt ist, sodass nur eine zur Mittenachse symmetrische Verstellung der seitlichen Haltearme 42 möglich ist. Dadurch wird erreicht, dass das Telekommunikationsgerät immer symmetrisch zur vertikalen Mittenachse der Befestigungsplatte 29 gehalten wird.

Die Rückwand 41 ist mit einer in der Zeichnung nicht dargestellten Ladeinduktionsspule versehen, die mit der Versorgungspannung angesteuert wird, wenn die Zündung eingeschaltet ist. Demzufolge ist die Halterung 40 zur induktiven Aufladung eines hierfür vorgesehenen Telekommunikationsgeräts 46 bestimmt. Durch die Verschiebung des als Fuß ausgebildeten Haltearms 43 wird das Telekommunikationsgerät vor der Rückwand 41 nach oben verschoben, bis die in der Rückwand 41 befindliche Elektronik eine maximale Übereinstimmung zwischen der in der Rückwand 41 befindlichen Ladeinduktionsspule und der im Telekommunikationsgerät 46 befindlichen Spule feststellt. Zu diesem Zeitpunkt gibt die Halterung 40 ein Anzeigesignal ab, das dem Nutzer anzeigt, dass nunmehr die optimale Stellung des Telekommunikationsgeräts 46 in der Halterung erreicht ist. In dem dargestellten Ausführungsbeispiel ist das Anzeigesignal ein optisches Anzeigesignal, das mit einer Leuchtdiode in der Rückwand erzeugt wird. Der als Fuß ausgebildete Haltearm 43 ist als Lichtleiter ausgebildet und leuchtet somit sofort erkennbar auf, wenn die für eine induktive Ladung geeignete Position des Telekommunikationsgeräts 46 erreicht ist. Danach sollte die Verstellung des als Fuß ausgebildeten Haltearms 43 beendet werden. Im Anschluss daran wird das Telekommunikationsgerät mit den Klemmbacken 44 der seitlichen Haltearme 42 seitlich geklemmt und dadurch in der Halterung 40 sicher gehalten. Das Lösen der Haltearme 42, 43 ist durch Betätigung einer Entriegelungstaste 47 möglich, die eine Verriegelungsverzahnung von den Haltearmen 42, 43 trennt, sodass diese in ihre ausgefahrene Stellung gemäß Figur 8 zurückfahrbar sind.

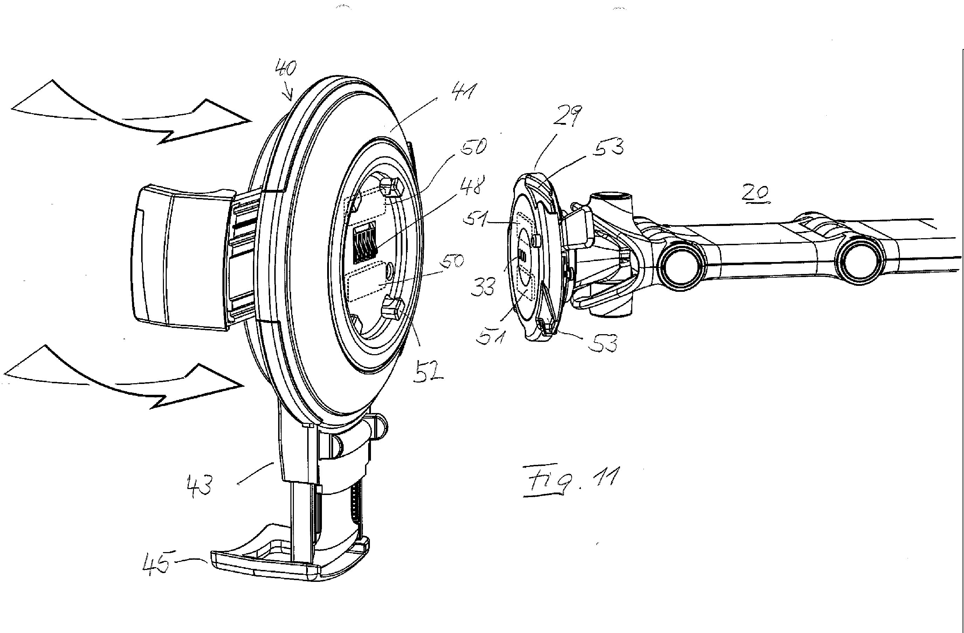

Figur 11 lässt die Rückseite der Rückwand 41 erkennen, die an die Form der Befestigungsplatte 29 angepasst ist. Auf der Rückseite befinden sich fünf Federkontakte 48, die symmetrisch angeordnet sind. Dabei ist der mittlere Federkontakt für das Massepotential vorgesehen und kontaktiert eine zentrische Kontaktfläche 33 der Befestigungsplatte 29. Die beiden neben dem mittleren Federkontakt befindlichen Federkontakte können beispielsweise mit dem Pluspol verbunden werden, während die äußeren Federkontakte beispielsweise mit dem Signal "Zündung ein/aus " verbunden werden können. Für die beiden möglichen Verbindungsstellungen, die sich um 180° unterscheiden, wird die Halterung 40 somit immer korrekt gepolt mit den elektrischen Signalen bzw. Potentialen versorgt.

Die Halterung ist somit auch mit dem den Fuß bildenden Haltearm 43 nach oben an der Befestigungsplatte verriegelbar, wenn dies die Einbausituation erfordern sollte.

Das in der Halterung 40 gehaltene Telekommunikationsgerät 46 kann aufgrund des Haltestücks 20 in unterschiedlichen Höhen, Abständen und seitlichen Neigungen gehalten werden, sodass die für einen Betrachter optimale Position einstellbar ist.

In der Darstellung der Figur 11 sind sowohl in der Rückwand 41 der Halterung 40 Permanentmagnete 50 als auch in der Befestigungsplatte 29 des Haltestücks 20 Permanentmagnete 51 angedeutet. Die dargestellte Position von Halter 40 und Haltestück 20 zueinander entspricht der verriegelten, also montierten Stellung, in der die Permanentmagnete 50 und 51 jeweils einander gegenüber liegen. In dem dargestellten Ausführungsbeispiel sind die Permanentmagnete 50, 51 als rechteckige Platten ausgebildet, die so magnetisiert sind, dass auf ihren großen Flächen der Nordpol beziehungsweise der Südpol vorhanden ist. Dabei befinden sich die Magnete auf demselben Radius um die Drehachse der Drehbewegung, mit der die Halterung 40 an dem Haltestück 20 festlegbar ist. Hierzu sind auf der Rückseite 41 der Halterung 40 vier L-förmige Ansätze 52 angeformt, die in entsprechende Rampenführungen 53 der Befestigungsplatte 29 in einer Ausgangsstellung einführbar sind und über die Rampe in eine Raststellung durch eine Drehbewegung um die senkrecht zur Rückwand 41 stehende Drehachse bringbar sind.

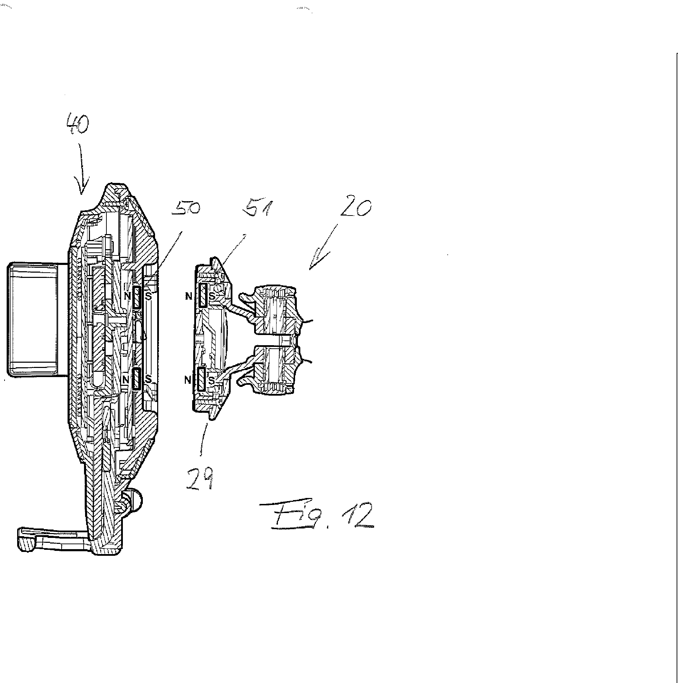

Figur 12 verdeutlicht in einer Schnittdarstellung, dass die Permanentmagnete 50 und 51 jeweils mit ungleichnamigen Polen N, S in der dargestellten Raststellung zueinander zeigen. In der Ausgangsstellung sind die Permanentmagnete 50, 51 in Umfangsrichtung voneinander beabstandet und üben eine erhebliche Anziehungskraft aus, durch die der Halter 40 in die korrekte Position relativ zur Befestigungsplatte 29 des Haltestücks 20 gezogen wird.

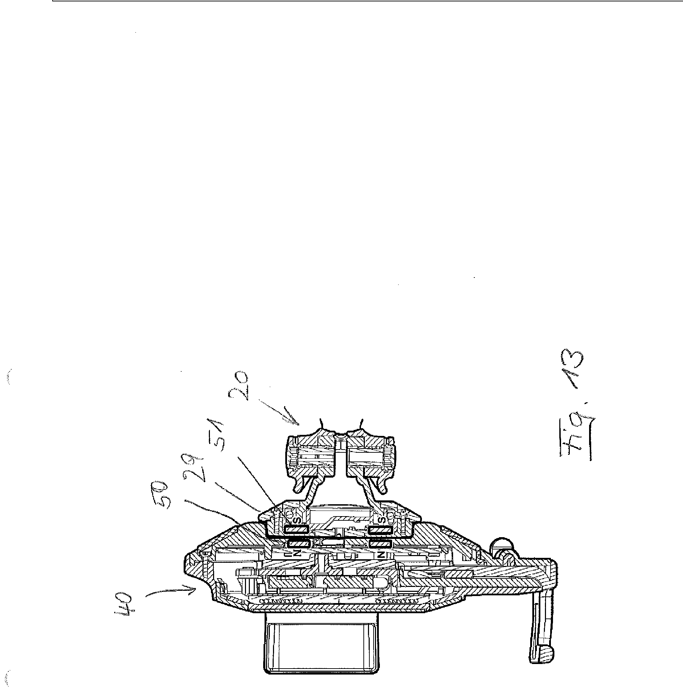

Figur 13 zeigt den endgültig montierten Zustand der Raststellung.

Das beschriebene Haltersystem ist ohne die Anordnung der Permanentmagnete 50, in der Rückwand 41 der Halterung 40 und der Permanentmagnete 51 in der Befestigungsplatte 29 des Haltestücks 20 in der älteren, jedoch nicht vorveröffentlichten WO 2017/220413 A1 offenbart.

## Patentansprüche

1. Haltersystem für ein elektronisches Gerät (46) mit einem zur ortsfesten Befestigung vorgesehenen Haltestück (20) und einer mit dem Haltestück (20) verbindbaren Halterung (40), an der das elektronische Gerät (46) lösbar befestigbar ist, wobei das Haltestück (20) an einer Befestigungsplatte (29) und die Halterung (40) an einer Rückwand (41) Befestigungselemente (52, 53) aufweisen und in die Befestigungsplatte (29) einerseits und in die Rückwand (41) andererseits Magnete (50, 51) oder ferromagnetische Stücke eingesetzt sind, **dadurch gekennzeichnet, dass** die Befestigungselemente durch vier L-förmige Ansätze (52) an der Rückseite der Halterung (40) und Rampenführungen (53) nach Art eines Bajonettverschlusses gebildet sind, wobei die L-förmigen Ansätze in die entsprechenden Rampenführungen (53) der Befestigungsplatte (29) in einer Ausgangsstellung einführbar sind und die Befestigungselemente (52, 53) mittels einer Drehbewegung um weniger als 180° zueinander aus einer Ausgangsstellung in eine mechanische Raststellung bringbar sind, dass die Magnete (50, 51) die mechanische Befestigung der Halterung (40) an dem Haltestück (20) mittels der Drehbewegung durch eine zunehmende magnetische Anziehung aus der Ausgangsstellung in die Raststellung hinein unterstützen, und dass die Befestigungsplatte (29) einen zum Lösen eines Federandrucks und Ermöglichen eines Zurückdrehens aus dem Bajonettverschluss (31) eingerichteten Hebel (32) hat.

2. Haltersystem nach Anspruch 1, **dadurch gekennzeichnet, dass** sowohl in die Rückwand (41) der Halterung (40) als auch in die Befestigungsplatte (29) des Haltestücks (20) jeweils zwei Permanentmagnete (50, 51) so eingesetzt sind, dass sie in der Raststellung jeweils einander gegenüberliegen.

3. Haltersystem nach Anspruch 1 oder 2, **dadurch gekennzeichnet, dass** die Befestigungselemente als Bajonettführung für die Drehbewegung zwischen Halterung (40) und Haltestück (20) ausgebildet ist.

## Claims

1. Holder system for an electronic device (46) with a holding piece (20) provided for stationary fastening and a mounting (40) which can be connected to the holding piece (20) and to which the electronic device (46) can be detachably fastened, wherein the holding piece (20) on a fastening plate (29), and the mounting (40) on a rear wall (41), have fastening elements (52, 53) and magnets (50, 51) or ferromagnetic pieces are inserted into the fastening plate (29) on the one hand and into the rear wall (41) on the other hand, **characterised in that** the fastening elements are formed by four L-shaped appendages (52) on the rear side of the mounting (40) and ramp guides (53) in the manner of a bayonet catch, wherein the L-shaped appendages can be inserted into the corresponding ramp guides (53) of the fastening plate (29) in an initial position and the fastening elements (52, 53) can be brought from an initial position into a mechanical latching position by means of a rotary movement through less than 180° relative to one another, that the magnets (50, 51) support the mechanical fastening of the mounting (40) to the holding piece (20) by means of the rotary movement through an increasing magnetic attraction from the initial position into the latching position, and **in that** the fastening plate (29) has a lever (32) set up for releasing a spring pressure and enabling a turning back out of the bayonet catch (31).

2. Holder system according to claim 1, **characterised in that** two permanent magnets (50, 51) are inserted both in the rear wall (41) of the mounting (40) and in the fastening plate (29) of the holding piece (20) in such a way that they are each opposite one another in the latched position.

3. Holder system according to claim 1 or 2, **characterised in that** the fastening elements are designed as bayonet guides for the rotary movement between the mounting (40) and the retaining piece (20).

## Revendications

1. Système de maintien pour un appareil électronique (46) comprenant une pièce de maintien (20) prévue pour une fixation stationnaire et un support (40) pouvant être relié à la pièce de maintien (20) au niveau de laquelle l'appareil électronique (46) peut être fixé de manière détachable, dans lequel la pièce de maintien (20), au niveau d'une plaque de fixation (29), et le support (40), au niveau d'une paroi arrière (41), présentent des éléments de fixation (52, 53), et dans lequel des aimants (50, 51) ou des pièces ferromagnétiques sont insérés dans la plaque de fixation (29) d'une part et dans la paroi arrière (41) d'autre part, **caractérisé en ce que** les éléments de fixation sont formés par quatre projections en forme de L (52) au niveau de la paroi arrière du support (40) et des guidages à rampe (53) du type à fermeture à baïonnette, dans lequel les projections en forme de L peuvent être introduites dans les guidages à rampe correspondants (53) de la plaque de fixation (29) dans une position de départ, et les éléments de fixation (52, 53) peuvent être ramenés les uns vers les autres via un mouvement rotatif de moins de 180° depuis une position de départ dans une position d'encliquetage mécanique, **en ce que** les aimants (50, 51) soutiennent la fixation mécanique du support (40) au niveau de la pièce de retenue (20) via le mouvement rotatif grâce à une attraction magnétique allant en augmentant depuis la position de départ jusque dans la position d'encliquetage, et **en ce que** la plaque de fixation (29) a un levier (32) configuré pour relâcher une pression de ressort et pour permettre une rotation de retour depuis la fermeture à baïonnette (31).

2. Système de maintien selon la revendication 1, **caractérisé en ce que** deux aimants permanents (50, 51) sont à chaque fois insérés tant dans la paroi arrière (41) du support (40) que dans la plaque de fixation (29) de la pièce de maintien (20) de telle sorte qu'ils sont respectivement en face les uns des autres dans la position d'encliquetage.

3. Système de retenue selon la revendication 1 ou 2, **caractérisé en ce que** les éléments de fixation sont réalisés en tant que guidages à baïonnette pour le mouvement rotatif entre le support (40) et la pièce de maintien (20).
